# EUROPÄISCHE PATENTSCHRIFT

(11) **EP 0 877 672 B1**
(45) Veröffentlichungstag und Bekanntmachung des Hinweises auf die Patenterteilung: **04.08.1999**
(21) Anmeldenummer: 97902308.2
(22) Anmeldetag: 03.02.1997
(51) Int. Cl.: B60K 17/04, B60T 1/06, F16D 55/224

(54) **PORTALACHSE**
OFFSET AXLE
PONT PORTIQUE

(30) Priorität: 09.02.1996 DE 19604730
(43) Veröffentlichungstag der Anmeldung: 18.11.1998
(73) Patentinhaber: ZF FRIEDRICHSHAFEN Aktiengesellschaft, 88038 Friedrichshafen (DE)
(72) Erfinder: MAURER, Dieter, D-94032 Passau (DE); BRYSCH, Werner, D-94036 Passau (DE); ALESCH, Klaus, D-94107 Untergriesbach (DE); AMSL, Johann, D-94051 Hauzenberg (DE)
(74) Vertreter: Zietlow, Karl-Peter
(86) Internationale Anmeldenummer: EP9700480
(87) Internationale Veröffentlichungsnummer: WO9728980

(56) Entgegenhaltungen:
- DE-A- 3 027 806
- US-A- 4 036 330

## Beschreibung

Die Erfindung befaßt sich mit einer Portalachse nach dem Oberbegriff von Anspruch 1. Portalachsen sind bekannt, in der deutschen Patentschrift 30 27 806 ist ein Ausführungsbeispiel beschrieben. In Portalachsen sind die Achswellen gegenüber den Radachsen um einen bestimmten Abstand, der sogenannten Portalhöhe oder -tiefe, versetzt. Dieser Achsversatz wird durch jeweils ein Zwischengetriebe unmittelbar am Randantrieb, dem sogenannten Portaltrieb, hervorgerufen. Ein Achsversatz nach oben ermöglicht eine größere Bodenfreiheit eines Fahrzeuges, ein Achsversatz nach unten eine niedrigere Ladefläche oder Flurhöhe. In Nahverkehr- oder Stadtomnibussen ist eine möglichst niedrige Flurhöhe wünschenswert, um den Fahrgästen ein bequemes und zügiges Ein- und Aussteigen zu ermöglichen. Die Fahrgäste betreten den Bus vom Bordstein aus, ohne merklich nach oben steigen zu müssen. Dies ist insbesondere für Rollstuhlfahrer oder Kinderwagen eine deutliche Erleichterung.

In der deutschen Patentschrift 30 27 806 ist eine Portalachse für Nahverkehrsomnibusse beschrieben. In dieser Portalachse ist ein Ausgleichgetriebe außermittig, unmittelbar neben einem der beiden Portaltriebe, angebracht. Denn das Ausgleichgetriebe beansprucht Platz und der Fahrzeuginnenboden muß deshalb an dieser Stelle erhöht sein. Damit der Durchgang auf der niedrigen Flurhöhe hinreichend breit bleibt, wird das Ausgleichgetriebe möglichst nahe an einem der Radkästen und damit auch möglichst nahe an einem der Portaltriebe untergebracht. Die Achswellen des Ausgleichgetriebes sind jeweils in ein Antriebsritzel eines Portaltriebes eingesteckt, das frei schwimmend und selbst zentrierend direkt zwischen zwei Zwischenritzeln angebracht und mit diesen im Eingriff ist, so daß alle drei Ritzelachsen in einer Ebene liegen. Die Zwischenritzel greifen wiederum in ein Stirnrad zum Radantrieb ein. Die Zahneingriffskraft und die Antriebsleistung wird auf die beiden Zwischenritzel gleichmäßig verteilt. Diese Bauart des Portaltriebes ist laufruhig und in Höhe und axialer Ausdehnung kompakt und gestattet somit einen breiteren Durchgang im Flur und eine hinreichende Bodenfreiheit trotz großer Portaltiefe. Der Portaltrieb ist stark untersetzt, damit das maximale Drehmoment der Achswellen und damit die Baugröße des Ausgleichgetriebes gering gehalten werden kann. Die Achswellen befinden sich mittig in einem Achsbrückengehäuse, dessen Querschnitt infolge der Kraftbeanspruchung deutlich größer ist als der der Achswellen.

Die in der deutschen Patentschrift 30 27 806 beschriebene Portalachse hat den Nachteil, daß infolge des Platzbedarfs des Portaltriebes keine handelsübliche Scheibenbremse in das Achssystem integriert werden kann, ohne daß aufgrund der nötigen Umkonstruktion die Flurhöhe deutlich und untolerierbar Zunimmt. Denn um die Scheibenbremse anbringen zu können, muß das Stirnrad zum Radantrieb deutlich verkleinert werden. Um das Untersetzungsverhältnis beibehalten zu können, muß der Antriebsritzel ebenso verkleinert werden. Damit nimmt die Portaltiefe ab und die Flurhöhe zu. Außerdem nimmt aufgrund der axialen Länge der Bremszylinder die Durchgangsbreite des Flurs im Fahrzeug im Bereich der Achse weiter ab.

Aufgabe der Erfindung ist es, eine Portalachse zu schaffen, die eine Integration von Scheibenbremsen in das Portalachssystem ermöglicht, ohne dabei die Durchgangsbreite des Flurs im Fahrzeug im Bereich der Achse zu verringern und trotz konstruktionsbedingter, deutlich verringerter Portaltiefe eine hinreichend niedrige Flurhöhe ermöglicht.

Die Aufgabe der Erfindung wird gelöst, indem die Scheibenbremsen in das Portalachssystem derart integriert werden, daß die zugehörigen Bremszylinder jeweils in dem knappen Raum zwischen Portaltrieb, Radfelge, Reifen und Chassis senkrecht stehend eingebaut sind. Der dann bezüglich der Bremsscheiben radial wirkende Zylinderhub wird über Hebel auf die Bremsscheiben umgelenkt. Eine hinreichend niedrige Flurhöhe trotz konstruktionsbedingter, deutlich verringerter Portaltiefe wird erzielt, indem sich die Achswellen außermittig liegend in eine Aussparung am oberen Innenrand des Achsbrückengehäuses anschmiegen. Damit nimmt der Abstand zwischen Seelenachse der Achswelle und Fahrzeuginnenboden deutlich ab und die Flurhöhe damit ebenso. Die Festigkeit der Achsbrücke wird dabei bei günstiger Ausgestaltung nicht beeinträchtigt.

In einer vorteilhaften Ausgestaltung der Erfindung werden die Scheibenbremsen dabei von einem Pneumatikzylinder über einen Umlenkhebel betätigt. Die Zylinderachse des Pneumatikzylinders ist dabei innerhalb eines gewissen Winkelbereichs radial zur Bremsscheibenachse angebracht. Der Winkel zwischen Pneumatikzylinderachse und Bremsscheibenachse beträgt vorzugsweise zwischen 80° und 100°, also die Abweichung vom radialen Einbau 0 bis 10°, so daß der Pneumatikzylinder gerade neben der Innenseite der Radfelge und des Reifens untergebracht ist und die Portalachse in ihrem Platzbedarf nicht beeinträchtigt.

Vorzugsweise besitzt das Antriebsritzel eine Zähnezahl von 21 und einen Modul von 3,0, die Zwischenritzel eine Zähnezahl von 61 und einen Modul von 3,0 und das Stirnrad eine Zähnezahlvon 67 und einen Modul von 3. Die Portalhöhe betragt dabei ca. 144 mm.

In einer weiteren vorteilhaften Ausgestaltung der Erfindung ist die Kardanwelle in einem 87°-Winkel zur Achswelle angeordnet. Damit läßt sich der Motor im Bus längs auf einer Seite im Heck einbauen und beeinträchtig den Innenraum dadurch weniger.

In Zeichnungen ist ein Ausführungsbeispiel der Erfindung dargestellt. Es zeigen:

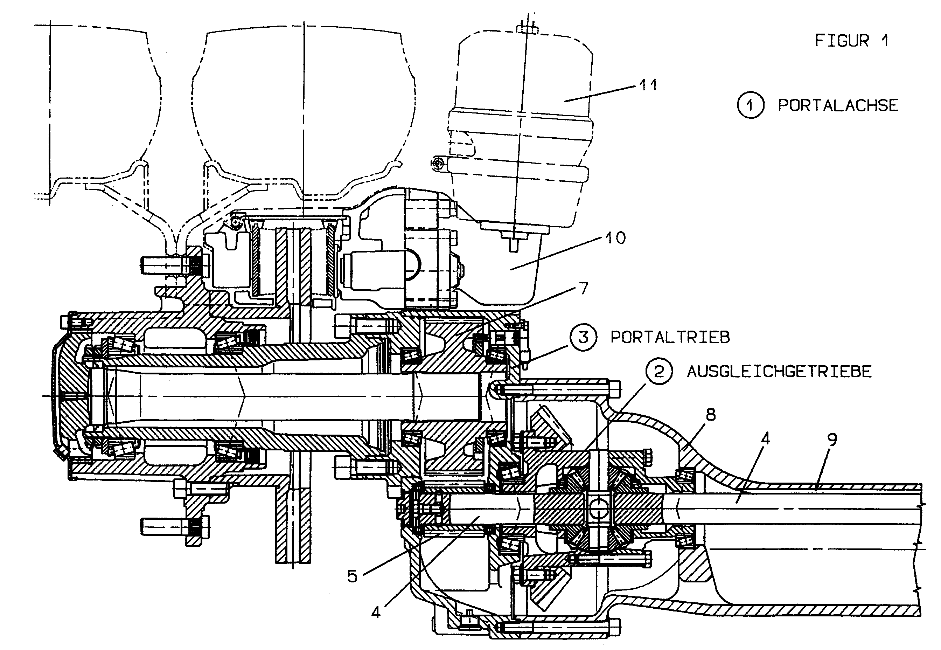

- Fig. 1: einen Schnitt durch eine Portalachse;

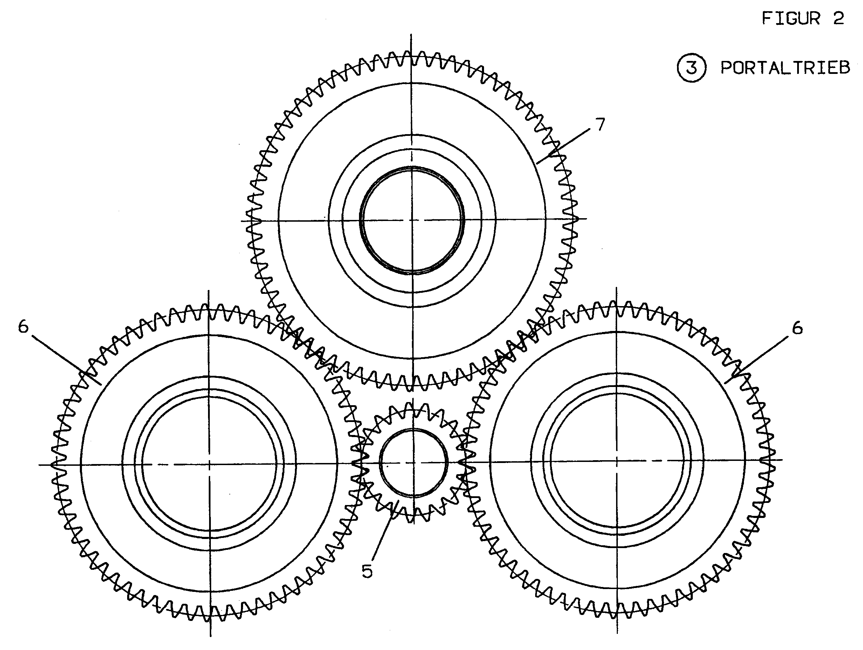

- Fig. 2: einen Schnitt durch den Portaltrieb;

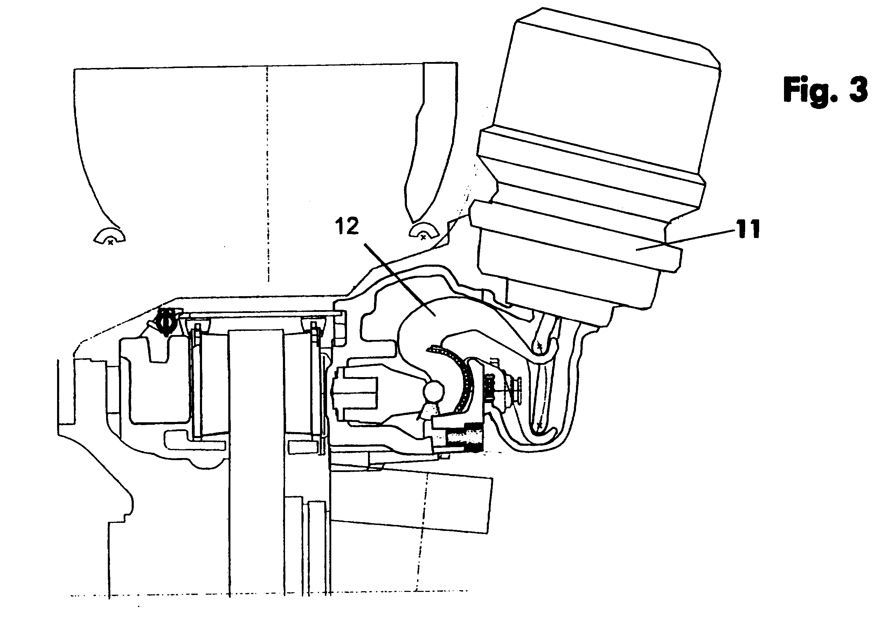

- Fig. 3: die Scheibenbremsenanordnung und

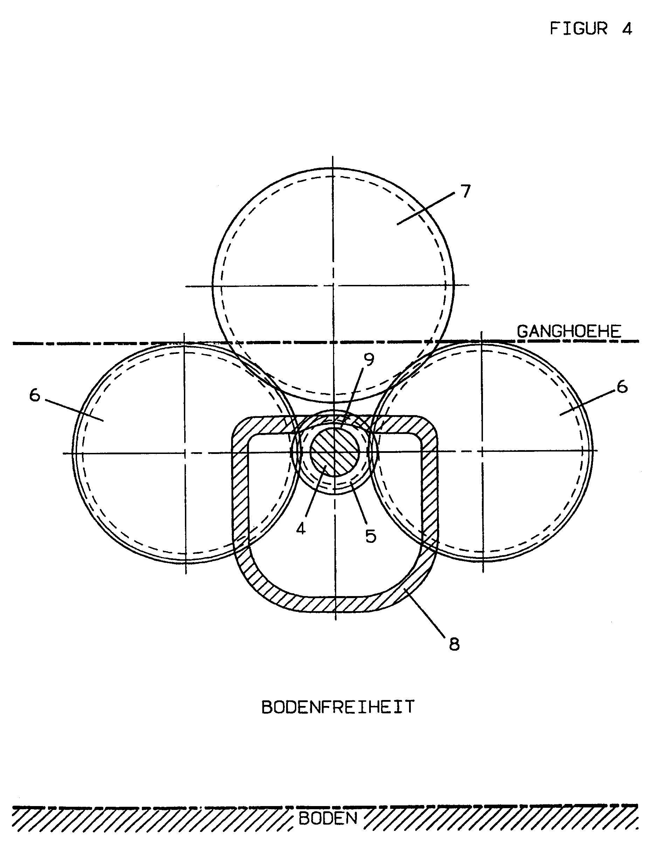

- Fig. 4: die Achswelle im Achsbrückengehäuse.

In einer Portalachse 1 ist ein Ausgleichgetriebe 2 außermittig, unmittelbar neben einem der beiden Portaltriebe 3, angebracht. Die Achswellen 4 des Ausgleichgetriebes 2 sind jeweils in ein Antriebsritzel 5 eines Portaltriebes 3 eingesteckt, das frei schwimmend und selbst zentrierend direkt zwischen zwei Zwischenritzeln 6 angebracht und mit diesen im Eingriff ist, so daß alle drei Ritzelachsen in einer Ebene liegen. Die Zwischenritzel 6 greifen wiederum in ein Stirnrad 7 zum Radantrieb ein. Die längere der beiden Achswellen 4 ist so gelagert, daß sie außermittig am oberen Rand des Innenraums des Achsbrückengehäuses 8 liegt. Das Achsbrückengehäuse 8 besitzt an seiner Oberseite innen eine Aussparung 9, an die sich die Achswelle 4 anschmiegt, so daß sie möglichst hoch bezüglich des Achsbrückengehäuses 8 angeordnet ist. Der Radantrieb wird mit Scheibenbremsen 10 gebremst, die von Pneumatikzylindern 11 über Umlenkhebel 12 betätigt werden.

### Bezugszeichen

- 1: Portalachse
- 2: Ausgleichgetriebe
- 3: Portaltrieb
- 4: Achswellen
- 5: Antriebsritzel
- 6: Zwischenritzel
- 7: Stirnrad
- 8: Achsbrückengehäuse
- 9: Aussparung
- 10: Scheibenbremsen
- 11: Pneumatikzylinder
- 12: Umlenkhebel

## Patentansprüche

1. Portalachse (1) für niederflurige Fahrzeuge, insbesondere Nahverkehrsomnibusse, mit einem Ausgleichgetriebe (2), dessen Achswellen (4) jeweils in ein Antriebsritzel (5) eines Portaltriebes (3) mit Untersetzungswirkung eingesteckt sind, das frei schwimmend und selbst zentrierend zwischen zwei Zwischenritzeln (6) angebracht ist, die jeweils die halbe Antriebsleistung auf ein Stirnrad (7) zum Radantrieb übertragen, wobei die Achswellen (4), bedingt durch die beiden Portaltriebe (3), um die Portaltiefe niedriger liegen als die Radachsen, dadurch **gekennzeichnet,**
- daß Scheibenbremsen (10) in das Portalachssystem integriert sind, wobei die zugehörigen Bremszylinder jeweils in dem knappen Raum zwischen Portaltrieb (3), Radfelge, Reifen und Chassis innerhalb eines gewissen Winkelbereichs radial zur Bremsscheibenachse eingebaut sind, und der Zylinderhub über Hebel auf die Bremsscheiben umgelenkt wird und
- daß sich die Achswellen (4) außermittig liegend in eine Aussparung (9) am oberen Innenrand des Achsbrükengehäuses (8) anschmiegen.

2. Portalachse (1) nach Anspruch 1, dadurch **gekennzeichnet,** daß die Scheibenbremsen (10) von einem Pneumatikzylinder (11) über einen Umlenkhebel (12) betätigt werden.

3. Portalachse (1) nach Anspruch 1 oder 2, **dadurch gekennzeichnet,** daß das Antriebsritzel (5) eine Zähnezahl von 21 und einen Modul von 3,0, die Zwischenritzel (6) eine Zähnezahl von 61 und einen Modul von 3,0 und das Stirnrad (7) eine Zähnezahl von 67 und einen Modul von 3 aufweisen und die Portalhöhe ca. 144 mm beträgt.

4. Portalachse (1) nach Anspruch 1, 2 oder 3, **dadurch gekennzeichnet,** daß die Kardanwelle in einem 87°-Winkel zur Achswelle (4) angeordnet ist.

## Claims

1. Drop-center offset axle (1) for low-floor vehicles, in particular local buses equipped with a differential (2) whose axle shafts (4) are each inserted in an input pinion (5) of a gantry drive (3) with reduction effect, freely mounted in a self-centering manner between two intermediate pinions (6), which each transmit half the drive power to a spur wheel (7) in order to drive the wheels, with the axle shafts (4) - owing to the two gantry drives (3) - being lower than the wheel axles by the depth of the gantry;
**characterized** in that
- the disk brakes (10) are integrated in the drop-center offset axle system, with each brake cylinder being installed in the small space between gantry drive (3), wheel rim, tire and chassis - within a given angular range radially to the brake disk axis -, and the cylinder stroke being transferred via lever to the brake disks; and in that
- the eccentrically disposed axle shafts (4) nestle in a recess (9) on the upper inner edge of the axle bridge housing (8).

2. Drop-center offset axle (1) according to claim 1;
**characterized** in that the disk brakes (10) are actuated by a pneumatic cylinder (11) via a transfer lever (12).

3. Drop-center offset axle (1) according to claim 1 or 2;
**characterized** in that the input pinion (5) has 21 teeth and a module of 3.0, each intermediate pinion (6) has 61 teeth and a module of 3.0, and the spur wheel (7) has 67 teeth and a module of 3, and the drop-center height is about 144 mm.

4. Drop-center offset axle (1) according to claim 1, 2 or 3;
**characterized** in that the cardan shaft is arranged in an 87°-angle to the axle shaft (4).

## Revendications

1. Essieu portique (1) pour véhicules à plate-forme surbaissée, notamment pour des bus du trafic de banlieue, comportant un différentiel (2) dont les arbres d'essieu (4) sont emboîtés chacun dans un pignon menant (5) d'un entraînement à portique (3) avec effet démultiplicateur, qui est monté flottant et à centrage automatique entre deux pignons intermédiaires (6) lesquels transmettent chacun la moitié de la puissance d'entraînement sur un pignon droit (7) pour la propulsion des roues, les arbres d'essieu (4), en raison des deux entraînements à portique, étant placés autant que la profondeur du portique plus bas que les deux essieux des roues, **caractérisé en ce que,**
- des freins à disques (10) sont intégrés dans le système à essieux portiques, les cylindres de frein correspondants étant montés dans l'espace réduit entre l'entraînement à portique (3), la jante de la roue, le pneu et le châssis à l'intérieur d'une certaine zone d'angle dans le sens radial par rapport à l'axe des disques du frein et la course du cylindre est renvoyée par l'intermédiaire de leviers sur les disques de frein et
- les arbres d'essieu (4) situés en position excentrée s'adaptent dans un évidement (9) au bord intérieur supérieur du carter du pont des essieux.

2. Essieu portique (1) selon la revendication 1, **caractérisé en ce que** les freins à disques (10) sont actionnés par un cylindre pneumatique (11) par l'intermédiaire d'un levier de renvoi (12).

3. Essieu portique (1) selon la revendication 1 ou 2, **caractérisé en ce que** le pignon menant (5) présente un nombre de dents de 21 et un module de 3.0, les pignons intermédiaires (6) un nombre de dents de 61 et un module de 3.0 et le pignon droit (7) un nombre de dents de 67 et un module de 3, la hauteur du portique étant environ 144 mm.

4. Essieu portique (1) selon la revendication 1, 2 ou 3, **caractérisé en ce que** l'arbre cardan est agencé dans un angle de 87° par rapport à l'arbre d'essieu (4).
